# EUROPEAN PATENT SPECIFICATION

(11) **EP 3 185 093 B1**
(45) Date of publication and mention of the grant of the patent: **01.03.2023**
(21) Application number: 16196981.1
(22) Date of filing: 03.11.2016
(51) Int. Cl.: G05B 19/042, F24F 11/32, F24F 11/58, F24F 11/63

(54) **METHOD AND SYSTEM FOR PROTECTING A FAN**
VERFAHREN UND SYSTEM ZUM SCHUTZ EINES VENTILATORS
PROCÉDÉ ET SYSTÈME DE PROTECTION D'UN VENTILATEUR

(30) Priority: 25.12.2015 CN 201510997203
(43) Date of publication of application: 28.06.2017
(73) Proprietor: Xiaomi Inc., Beijing 100085 (CN)
(72) Inventor: LIU, Dongxu, Beijing 100085 (CN); HUANG, Xiaobo, Beijing 100085 (CN); XU, Ling, Beijing 100085 (CN)
(74) Representative: Steinbauer, Florian

(56) References cited:
- CN-A- 102 400 934
- CN-U- 203 068 663
- US-A1- 2011 160 914
- US-A1- 2013 024 013
- US-A1- 2014 229 122
- US-A1- 2015 112 640
- US-B2- 8 356 207

## Description

### TECHNICAL FIELD

The present invention generally relates to the field of device control technology, and more particularly, to a method and a system for protecting a fan.

### BACKGROUND

A Fan, as a household appliance used commonly in a family, would be often knocked down accidentally and moved transitorily when running. At this time, if the fan continues running, there may be security issues and foreign matters around may be inhaled or blown away.

In the related art, a power contact may fall off by a manner of a pressure contact after the fan falls down to the ground, so as to cause a power off of the fan. However, there may be following shortcomings when adopting this manner: a case of canceling a trigger may occur because of a lack of sensitivity. During a process that the fan falls down, a pre-determining cannot be performed and an alarm message cannot be sent to a user, such that the user cannot obtain a current state of the fan timely, and the user cannot be informed of an impending situation. US2013/0024013 discloses a system and method for actuator control. Information from a real sensor and a virtual sensor are fused to form a hybrid sensor.
CN 203 068 663 U discloses an electrical fan provided with a gravity sensor. The gravity sensor is used as a safety switch, which is specifically configured as an angle switch or an angle sensor that may make response to tumble of the electrical fan.
CN 102 400 934 A discloses an electrical fan. The electrical fan is provided with a gravity sensor connected to an internal power switch in the electrical fan. After the electrical fan falls down, the gravity sensor sends a turn-off signal to the power switch to switch off the power of the electrical fan.

Accordingly, a new method for protecting a fan, and a system for protecting the fan are required.

The above information disclosed in the background is only used for enhancing understandings about the background of the present invention, so that it may include information that do not form the prior art for those skilled in the art.

### SUMMARY

The present invention provides a method and a system for protecting a fan, which may know whether the fan departs from a preset state timely via a gravity sensor and turn electricity off timely.

Other features and advantages of the present invention will become apparent from the following detailed descriptions, or be learned partly from practices of the present invention.

According to an aspect of the present invention, the present invention provides a method for protecting a fan according to claim 1.

According to an embodiment of the present invention, the coordinate data includes a horizontal coordinate, and determining whether the coordinate data is beyond a scope of a standing state of the fan includes:
determining that the coordinate data is beyond the scope of the standing state of the fan, if a change of the horizontal coordinate exceeds a preset range for a certain period of time.

According to an embodiment of the present invention, the method further includes:
raising an alarm if the coordinate data is beyond the scope of the standing state, and sending an alarm message to a preset mobile terminal simultaneously, such that a user checks on a state of the fan in real time.

According to another aspect of the present invention, the present invention also provides a system for protecting a fan with a gravity sensor mounted on the fan, according to claim 4.

According to an embodiment of the present invention, the control module includes: a determining module, configured to determine according to a horizontal coordinate in the coordinate data whether the coordinate data is beyond the scope of the standing state of the fan, and to determine that the coordinate data is beyond the scope of the standing state of the fan if a change of the horizontal coordinate exceeds a preset range for a certain period of time.

According to an embodiment of the present invention, the system further includes:
an alarming module, configured to raise an alarm if the coordinate data is beyond the scope of the standing state.

According to an embodiment of the present invention, the system further includes:
a communication module, configured to send an alarm message to a preset mobile terminal at the same time when the alarming module raises the alarm, such that a user checks on a state of the fan in real time.

According to the method and the system for protecting a fan and a fan provided in the present invention, the coordinate data of the fan is collected via the gravity sensor, and the state that the fan is about to fall down to the ground is determined in real time, such that the fan may be disabled and the electricity may be turned off timely. The sensitivity is higher, thus preventing the fan from going on working after the fan falls down to the ground and avoiding security issues brought due to the work after falling.

It is to be understood that both the foregoing general description and the following detailed description are exemplary and explanatory only and are not restrictive of the present invention.

### BRIEF DESCRIPTION OF THE DRAWINGS

The exemplary embodiments of the present invention may be described in detail with reference to accompanying drawings, and the above and other objectives, features and advantages of the present invention will become more obvious.
Fig. 1 shows a flow chart of a method for protecting an fan according to an example embodiment of the present disclosure.
Fig. 2 shows a schematic diagram of a state machine according to an example embodiment of the present disclosure.
Fig. 3 shows a flow chart of switching a state of a state machine according to an example embodiment of the present disclosure.
Fig. 4 shows a flow chart of a method for protecting an fan according to another example embodiment of the present disclosure.
Fig. 5 shows a block diagram of a system for protecting an fan according to an example embodiment of the present disclosure.
Fig. 6 shows a block diagram of an fan according to an example embodiment of the present disclosure.

### DETAILED DESCRIPTION

According to an embodiment of the present disclosure, the fan further includes:
a gravity sensor mounted on the fan, in which the coordinate data of the fan is acquired by the gravity sensor.

According to the method and the system for protecting an fan and an fan provided in the present disclosure, the coordinate data of the fan is collected via the gravity sensor, and the state that the fan is about to fall down to the ground is determined in real time, such that the fan may be disabled and the electricity may be turned off timely. The sensitivity is higher, thus preventing the fan from going on working after the fan falls down to the ground and avoiding security issues brought due to the work after falling.

It is to be understood that both the foregoing general description and the following detailed description are exemplary and explanatory only and are not restrictive of the present disclosure.

### BRIEF DESCRIPTION OF THE DRAWINGS

The exemplary embodiments of the present disclosure may be described in detail with reference to accompanying drawings, and the above and other objectives, features and advantages of the present disclosure will become more obvious.

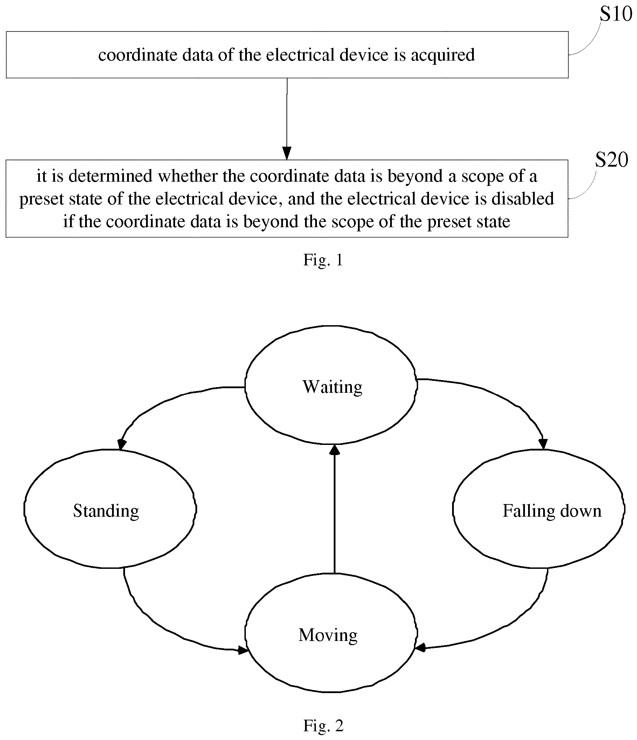

Fig. 1 shows a flow chart of a method for protecting an fan according to an example embodiment of the present disclosure.
Fig. 2 shows a schematic diagram of a state machine according to an example embodiment of the present disclosure.

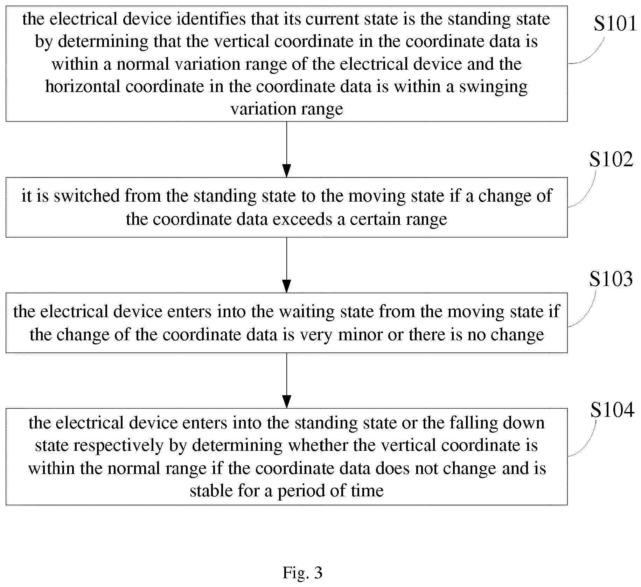

Fig. 3 shows a flow chart of switching a state of a state machine according to an example embodiment of the present disclosure.

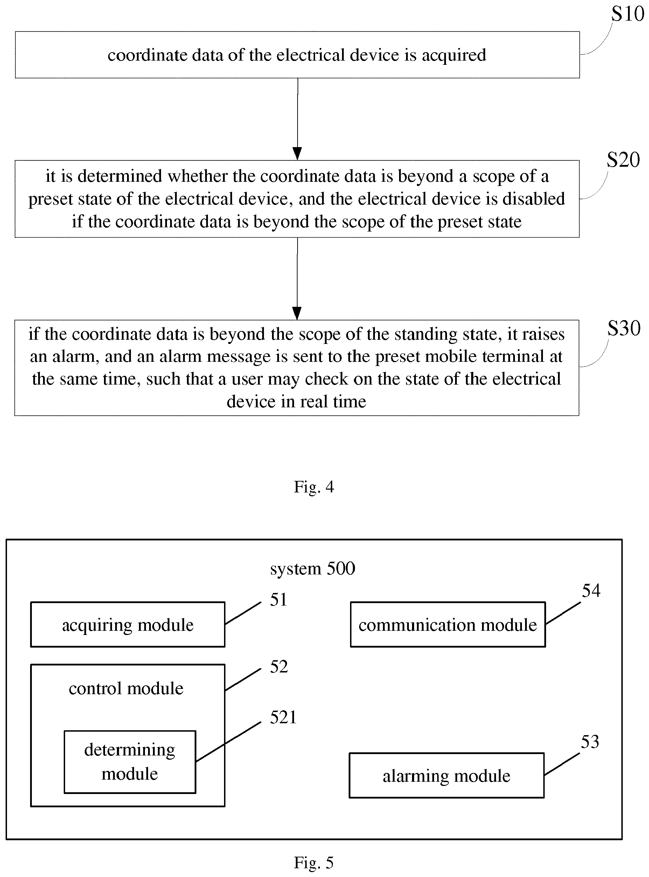

Fig. 4 shows a flow chart of a method for protecting an fan according to another example embodiment of the present disclosure.
Fig. 5 shows a block diagram of a system for protecting an fan according to an example embodiment of the present disclosure.

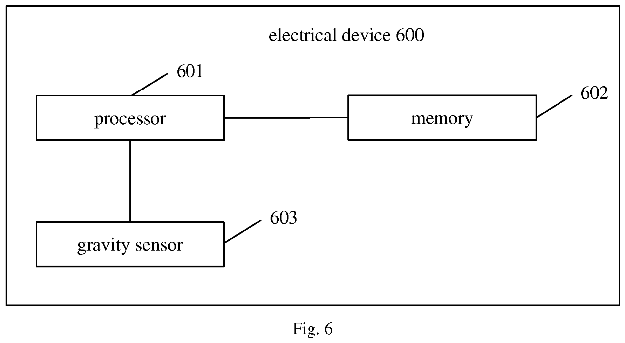

Fig. 6 shows a block diagram of an fan according to an example embodiment of the present disclosure.

### DETAILED DESCRIPTION

Now the example embodiments will be described fully with reference to the accompanying drawings. However, the exemplary embodiments may be implemented with a variety of forms, and be not understood as examples limited herein. Instead, these exemplary embodiments provided will make the present disclosure more comprehensive and complete, and conceptions of the example embodiments will convey fully to those skilled in the art. The accompanying drawings are merely schematically illustrations and are not drawn in proportion. The same numbers in accompanying drawings represent the same or similar elements, thereby omitting their description.

Furthermore, described features, structures, or characteristics may be combined in one or more embodiments by any suitable manner. In the following description, numerous specific details are provided to give full understandings of the embodiments of the present disclosure. However, those skilled in the art will appreciate that, technical solutions provided in the resent disclosure may be practiced but omitting one or more specific details, or by other methods, components, apparatus, steps, etc. In other cases, well-known structures, methods, apparatus, implements, materials, or operations will not shown or described to avoid distracting to make each aspect of the present disclosure become vague.

Some block diagrams shown in the accompanying drawings are functional entities that are not necessary to correspond to physically or logically separate entities. These functional entities may be implemented as the software, or in one or more hardware modules or integrated circuits, or in different networks and/or processor devices and/or microcontroller devices.

Fig. 1 shows a flow chart of a method for protecting an fan according to an example embodiment of the present disclosure.

As shown in Fig. 1, in step S10, coordinate data of the fan is acquired.

In this embodiment, the coordinate data of the fan is acquired by a gravity sensor mounted on the fan. The coordinate data includes a vertical coordinate and a horizontal coordinate. During a process of determining a state of the fan, the vertical coordinate and/or the horizontal coordinate may be used as a basis.

As shown in Fig. 1, in step S20, it is determined whether the coordinate data is beyond a scope of a preset state of the fan, and the fan is disabled if the coordinate data is beyond the scope of the preset state.

In this embodiment, the determining and switching of the state may be performed according to the coordinate data and its changes. Fig. 2 shows a schematic diagram of a state machine according to an example embodiment of the present disclosure, which includes four states of the fan, namely standing, falling down, moving and waiting. The preset state in this embodiment refers to the standing state. The standing state is a normal state for most fans and also a state allowing the fan to run. Once the fan moves or shakes, it indicates that the fan enters into the moving state. If changes during the moving state are very minor, it indicates that the fan enters into the waiting state. And then, during the waiting state, it is determined according to the vertical coordinate of the fan whether the fan is in the standing state or the falling down state.

Correspondingly, Fig. 3 shows a flow chart of switching a state of a state machine according to an example embodiment of the present disclosure.

As shown in Fig. 3, in step S101, the fan identifies that its current state is the standing state if determining that the vertical coordinate in the coordinate data is within a normal variation range of the fan and the horizontal coordinate in the coordinate data is within a swinging variation range. For example, the coordinate data is represented as Q (x, y, z), where Q represents a center (or a center of gravity) of the monitored and protected fan and is used to represent a spatial position of the fan. The so-called "normal variation range" may be vertical coordinates (represented as z) of the fan, which are determined by inherent design approaches of the fan. For a common height-adjustable console type fan, the normal variation range of the vertical coordinate z thereof is about a range of -255° ~ -180°. Since there is a work state in which the fan works by swinging its head, the horizontal coordinate may has a certain variation range (usually may be different based on sizes of different fans). So long as the vertical coordinate of the fan is within the normal variation range, and the horizontal coordinate thereof also is within the normal swinging variation range, the fan is in the standing state.

As shown in Fig. 3, in step S102, it is switched from the standing state to the moving state if a change of the coordinate data exceeds a certain range.

In step S102, it is determined whether the fan enters into the moving state according to the coordinate data by any one of three following implementations.

Implementation One: it is determined according to changes of the vertical coordinate. If the change of the vertical coordinate z exceeds a first preset range for a certain period of time, the fan is beyond the scope of the standing state and enters into the moving state.

The change of the vertical coordinate of the fan is represented as shaking parameters. There is a certain shaking caused by the operation of the motor during the work of the fan. However, if the shaking is minor (i.e., does not exceed a certain range), it is not considered that the state changes, that is, it is still in the standing state. If the shaking of the fan exceeds the certain range but the number of shaking times is less, it is considered that, the shaking is caused by the instability of the motor and cannot be used as the basis for determining the movement of the fan. Based on the above, it should be considered whether the shaking exceeds the certain range for a certain period of time at the same time when it is determined according to the changes of the vertical coordinate whether the fan departs from the standing state. For example, if the shaking of the vertical coordinate exceeds a range of -20° ~ 20° and it occurs 5 times, the state of the fan is switched from the standing state to the moving state immediately. According to the invention, at this time, the first preset range is the range of -20° ~ 20°. The certain period of time is usually a product of a sampling interval and the number of sampling times. Usually, the sampling interval is 100ms, and the period of time for shaking 5 times is about 5 * 100ms = 500ms. Therefore the above-mentioned certain period of time is 500ms.

Implementation Two: it is determined according to whether the vertical coordinate exceeds the normal variation range. At this time, the changes of the vertical coordinate are not considered, and the determining is performed directly according to the value of the vertical coordinate z. If the change of the vertical coordinate z exceeds a preset range, the fan is beyond the scope of the standing state and enters into the moving state. According to the invention, the normal range (i.e. the second preset range) of the fan is a range of -255° ~ 255°. If the vertical coordinate z exceeds this range, it needs not to further consider whether it lasts for a period of time, and it is determined that the fan enters into the moving state directly. The second preset range is larger than the first preset range.

Implementation Three: it is determined according to the changes of the horizontal coordinate. It is determined that the fan is beyond the scope of the standing state and enters into the moving state, if the change of the horizontal coordinate (x and y) exceeds a preset range for a certain period of time.

Usually, the change of the horizontal coordinate (x and y) of the fan is used as a standard for determining whether the fan is in the standing state. Similar to the above implementation, it needs to perform the determining according to the shaking of the horizontal coordinate exceeding a certain range for a certain period of time. For example, if the shaking of the horizontal coordinate (x and y) exceeds a range of -40° ~ 40° for 5 times, the state of the fan is switched from the standing state to the moving state immediately. At this time, the preset range of claims 4 and 9 is the range of -40° ~ 40°. The certain period of time is usually a product of a sampling interval and the number of sampling times. The sampling interval is typically 100ms, and the period of time for shaking 5 times is about to 5 * 100ms = 500ms. Therefore the certain period of time is 500ms.

After it is determined that the fan enters into the moving state, the fan keeps this moving state if the coordinate data (x, y, z) changes continuously.

As shown in Fig. 3, in step S103, the fan enters into the waiting state from the moving state if the change of the coordinate data is very minor or there is no change.

The standard that the change of the coordinate data is very minor is that the shaking of each of the horizontal coordinate and the vertical coordinate is less than a range of -20° ~ 20° and occurs no more than 5 times. If it is considered that the change is very minor, the fan enters into the waiting state from the moving state.

As shown in Fig. 3, in step S104, the fan enters into the standing state or the falling down state respectively by determining whether the vertical coordinate is within the normal range, if the coordinate data does not change and is stable for a period of time.

Usually, the period of time for the waiting state is very short (1 second ~ 3 seconds), that is, the coordinate data is stable for 1 second ~ 3 seconds, so that it is determined whether the fan is in the standing state or the falling down state according to the vertical coordinate. If the vertical coordinate is within the normal range of the fan, the fan enters into the standing state, and if the vertical coordinate is without the normal range of the fan, the fan enters into the falling down state.

Fig. 4 shows a flow chart of a method for protecting an fan according to another example embodiment of the present disclosure. In addition to steps S10, S20, as shown in Fig. 4, in step S30, if the coordinate data is beyond the scope of the standing state, it raises an alarm, and an alarm message is sent to the preset mobile terminal at the same time, such that a user checks on the state of the fan in real time.

The fan works only in the standing state. If the state of the fan is switched from the standing state to the moving state, the fan is shut down and raises an alarm (such as makes long beep sound). At the same time, the alarm message is sent to the mobile terminal (such as a mobile phone) of the user. The user may check on the state of the fan via an application in the mobile phone, such that the state of the fan may be checked on remotely and in real-time.

The fan communicates with the mobile terminal via a wireless network based on communication standard, such as Bluetooth, WiFi, 2G or 3G, or a combination thereof.

It should be noted that, the method for protecting an fan provided in the present disclosure is suitable for a fan, for example, a console type fan, a table fan, a fan remaining the standing state after being fixed to a position by clamping or fixing components, other fan having the standing state or the fixed state and required to be monitored whether it falls down to the ground.

In conclusion, with the method for protecting an fan provided in the present disclosure, the coordinate data of the fan is collected via the gravity sensor, and the state that the fan is about to fall down to the ground is determined in real time, such that the fan may be disabled and the electricity may be turned off timely. The sensitivity is higher, thus preventing the fan from going on working after the fan falls down to the ground and avoiding security issues brought due to the work after falling. If the fan departs from the standing state, it raises an alarm timely and reminds people around, and further sends the alarm message to the mobile terminal for the user to check on remotely and in real time.

Fig. 5 shows a block diagram of a system for protecting an fan according to an example embodiment of the present disclosure. As shown in Fig. 5, the system 500 includes an acquiring module 51, a control module 52, an alarming module 53 and a communication module 54.

The acquiring module 51 is configured to acquire coordinate data of the fan. The acquiring module 51 obtains the coordinate data of the fan by a gravity sensor mounted on the fan. The control module 52 is configured to determine whether the coordinate data is beyond a scope of a preset state of the fan, and to disable the fan if the coordinate data is beyond the scope of the preset state.

Corresponding to the three implementations provided in the above method, the control module may determine whether the state of the fan is exceeded by one of three following determining module when determining whether the coordinate data is beyond the scope of the preset state of the fan.

The determining module is configured to determine according to a vertical coordinate in the coordinate data whether the coordinate data is beyond the scope of the preset state of the fan, and to determine that the coordinate data is beyond the scope of the preset state of the v if a change of the vertical coordinate exceeds a preset range for a certain period of time.

The determining module is configured to determine according to a vertical coordinate in the coordinate data whether the coordinate data is beyond the scope of the preset state of the electrical device, and to determine that the coordinate data is beyond the scope of the preset state of the fan if a change of the vertical coordinate exceeds a second preset range.

The determining module is configured to determine according to a horizontal coordinate in the coordinate data whether the coordinate data is beyond the scope of the preset state of the fan, and to determine that the coordinate data is beyond the scope of the preset state of the fan if a change of the horizontal coordinate exceeds a third preset range for a certain period of time.

With respect to the systems in the above embodiments, the specific manners for performing operations for individual modules therein have been described in detail in the embodiments regarding the methods, which are not elaborated herein again.

The alarming module 53 is configured to raise an alarm if the coordinate data is beyond the scope of the preset state.

The communication module 54 is configured to send an alarm message to a preset mobile terminal at the same time when the alarming module 53 raises an alarm, such that a user checks on a state of the fan in real time.

The communication module 54 is realized by a wireless network based on communication standard, such as Bluetooth, WiFi, 2G or 3G, or a combination thereof.

As shown in Fig. 5, it is taken the determining module 521 included in the control module 52 being the determining module of claim 7 as an example. The determining module of claim 7 may be replaced by the determining module of claim 8 or the determining module of claim 9. The similar principles and structures are not repeated herein.

It may be determined whether the coordinate data of the fan is beyond the scope of the preset state according to the control module 52. If the coordinate data of the v is beyond the scope of the preset state, the alarming module 53 raises an alarm immediately, at the same time when the alarming module 53 raises the alarm, the alarm message is sent to the preset mobile terminal (such as a mobile phone), such that a user checks on the state of the electrical device in real time or remotely.

For the system embodiments, since they substantially correspond to the method embodiments, concerning related parts of the device embodiments, reference is made to corresponding parts of the method embodiments. The above-described system embodiments are merely illustrative, in which a unit as a separate component may or may not be physically separated, a component displayed as a unit may or may not be a physical unit, i.e. may be located at a place, or be distributed on multiple network units. Apart or all of the modules may be selected according to practical needs so as to achieve the object of the solution of the present disclosure, which may be understood and implemented by those skilled in the art without creative labor.

Fig. 6 shows a block diagram of an fan according to an example embodiment of the present disclosure. As shown in Fig. 6, the fan 600 includes a processor 610 and a memory 602 configured to store an instruction executable by the processor.

The processor 601 is configured to: acquire coordinate data of the fan; and determine whether the coordinate data is beyond a scope of a preset state of the fan, and disable the fan if the coordinate data is beyond the scope of the preset state.

The fan includes a gravity sensor 603 mounted on the fan. The coordinate data of the fan is acquired by the gravity sensor 603. The processor 601 may also determine the state of the fan according to the coordinate data, in which with regard to the determination method, a reference is made to the above embodiments, which is not repeated herein.

Correspondingly, the present disclosure also provides a non-transitory computer readable storage medium. If instructions in the storage medium is executable by the processor, it makes the terminal to perform a method for protecting an fan, and the method includes: acquiring coordinate data of the fan; and determining whether the coordinate data is beyond a scope of a preset state of the fan, and disabling the fan if the coordinate data is beyond the scope of the preset state.

In example embodiments, the present disclosure also provides a non-transitory computer readable storage medium including instructions, for example, a memory including the instructions, and the above instructions is executable by a processor to complete the method described above. For example, the non-transitory computer-readable storage medium may be a ROM, a random access memory (RAM), a CD-ROM, a magnetic tape, a floppy disk, and an optical data storage device, etc.

According to the description of the above embodiments, it should be understood by those skilled in the art that, the exemplary embodiments described herein may be realized by the software or a combination of the software with the necessary hardware. Therefore, technical solutions of the embodiments of the present disclosure may be embodied by a form of software product, and this software product may be stored in a non-transitory storage medium (may be a CD-ROM, a U disk, or a removable hard disk, etc.) or on a network, and includes several instructions to enable a computing device (may be a personal computer, a server, a mobile terminal, or network equipment) to perform the method according to embodiments of the present disclosure.

## Claims

1. A method for protecting a fan, comprising:
acquiring (S10) coordinate data of the fan; and
determining (S20) whether the coordinate data is beyond a scope of a standing state of the fan, and disabling the fan if the coordinate data is beyond the scope of the standing state,
wherein the coordinate data of the fan is acquired by a gravity sensor (603) mounted on the fan,
wherein the coordinate data comprises a vertical coordinate, the method being **characterized in that** determining
(S20) whether the coordinate data is beyond a scope of standing state of the fan comprises:
determining that the coordinate data is beyond the scope of the standing state of the fan due to shaking of the fan, if a change of the vertical coordinate exceeds a first preset range for a certain period of time, wherein the first preset range is -20°~20°, and the certain period of time is 500ms, and
determining that the coordinate data is beyond the scope of the standing state of the fan due to moving of the fan, if a change of the vertical coordinate exceeds a second preset range, wherein the second preset range is -255°~225°.

2. The method according to claim 1, wherein the coordinate data comprises a horizontal coordinate, and determining (S20) whether the coordinate data is beyond a scope of a standing state of the fan comprises: determining that the coordinate data is beyond the scope of the standing state of the fan, if a change of the horizontal coordinate exceeds a third preset range for a certain period of time.

3. The method according to any one of the preceding claims, further comprising: raising (S30) an alarm if the coordinate data is beyond the scope of the standing state, and sending an alarm message to a preset mobile terminal simultaneously, such that a user checks on a state of the fan in real time.

4. A system (500) for protecting a fan with a gravity sensor mounted on the fan, the system comprising:
an acquiring module (51), configured to acquire coordinate data of the fan; and
a control module (52), configured to determine whether the coordinate data is beyond a scope of a standing state of the fan, and to disable the fan if the coordinate data is beyond the scope of the standing state,
wherein the acquiring module (51) is configured to acquire the coordinate data of the fan by the gravity sensor mounted on the fan,
the system being
**characterized in that** the control module (52) comprises:
a first determining module, configured to determine according to a vertical coordinate in the coordinate data whether the coordinate data is beyond the scope of the standing state of the fan, and to determine that the coordinate data is beyond the scope of the standing state of the fan due to shaking of the fan if a change of the vertical coordinate exceeds a first preset range for a certain period of time, wherein the first preset range is -20°~20°, and the certain period of time is 500ms, and
a second determining module, configured to determine according to the vertical coordinate in
the coordinate data whether the coordinate data is beyond the scope of the standing state of the fan, and to determine that the coordinate data is beyond the scope of the standing state of the fan due to moving of the fan if a change of the vertical coordinate exceeds a second preset range, wherein the second preset range is -255°~225°.

5. The system according to claim 4, wherein the control module (52) comprises:
a third determining module, configured to determine according to a horizontal coordinate in the coordinate data whether the coordinate data is beyond the scope of the standing state of the fan, and to determine that the coordinate data is beyond the scope of the standing state of the fan if a change of the horizontal coordinate exceeds a third preset range for a certain period of time.

6. The system according to any one of claims 4 to 5, further comprising:
an alarming module (53), configured to raise an alarm if the coordinate data is beyond the scope of the standing state.

7. The system according to claim 6, further comprising:
a communication module (53), configured to send an alarm message to a preset mobile terminal at the same time when the alarming module raises the alarm, such that a user checks on a state of the fan in real time.

## Patentansprüche

1. Verfahren zum Schutz eines Ventilators, umfassend:
Erfassen (S10) von Koordinatendaten des Ventilators; und
Bestimmen (S20), ob die Koordinatendaten außerhalb eines Bereichs eines Standzustands des Ventilators liegen, und Deaktivieren des Ventilators, wenn die Koordinatendaten außerhalb des Bereichs des Standzustands liegen,
wobei die Koordinatendaten des Ventilators von einem am Ventilator angebrachten Schwerkraftsensor (603) erfasst werden,
wobei die Koordinatendaten eine vertikale Koordinate umfassen, wobei das Verfahren **dadurch gekennzeichnet ist, dass** das Bestimmen (S20), ob die Koordinatendaten außerhalb eines Bereichs des Standzustands des Ventilators liegen, umfasst:
Feststellen, dass die Koordinatendaten aufgrund von Schütteln des Ventilators außerhalb des Bereichs des Standzustands des Ventilators liegen, wenn eine Änderung der vertikalen Koordinate einen ersten voreingestellten Bereich für eine bestimmte Zeitspanne überschreitet, wobei der erste voreingestellte Bereich -20 °~20° beträgt und die bestimmte Zeitspanne 500ms beträgt, und
Bestimmen, dass die Koordinatendaten aufgrund von Bewegen des Ventilators außerhalb des Bereichs des Standzustands des Ventilators liegen, wenn eine Änderung der vertikalen Koordinate einen zweiten voreingestellten Bereich überschreitet, wobei der zweite voreingestellte Bereich -255°~225° beträgt.

2. Verfahren nach Anspruch 1, wobei die Koordinatendaten eine horizontale Koordinate umfassen, und das Bestimmen (S20), ob die Koordinatendaten außerhalb eines Bereichs eines Standzustands des Ventilators liegen, umfasst:
Feststellen, dass die Koordinatendaten außerhalb des Bereichs des Standzustands des Ventilators liegen, wenn eine Änderung der horizontalen Koordinate einen dritten voreingestellten Bereich für eine bestimmte Zeitspanne überschreitet.

3. Verfahren nach einem der vorhergehenden Ansprüche, ferner umfassend:
Auslösen (S30) eines Alarms, wenn die Koordinatendaten außerhalb des Bereichs des Standzustands liegen, und gleichzeitiges Senden einer Alarmmeldung an ein voreingestelltes mobiles Endgerät, so dass ein Benutzer den Zustand des Ventilators in Echtzeit überprüfen kann.

4. System (500) zum Schutz eines Ventilators mit einem am Ventilator montierten Schwerkraftsensor, wobei das System aufweist:
ein Erfassungsmodul (51), das so konfiguriert ist, dass es Koordinatendaten des Ventilators erfasst; und
ein Steuermodul (52), das so konfiguriert ist, dass es feststellt, ob die Koordinatendaten außerhalb des Bereichs eines Standzustands des Ventilators liegen, und dass es den Ventilator deaktiviert, wenn die Koordinatendaten außerhalb des Bereichs des Standzustands liegen,
wobei das Erfassungsmodul (51) so konfiguriert ist, dass es die Koordinatendaten des Ventilators durch den am Ventilator angebrachten Schwerkraftsensor erfasst,
wobei das System **dadurch gekennzeichnet ist, dass** das Steuermodul (52) umfasst:
ein erstes Bestimmungsmodul, das konfiguriert ist, um gemäß einer vertikalen Koordinate in den Koordinatendaten zu bestimmen, ob die Koordinatendaten außerhalb des Bereichs des Standzustands des Ventilators liegen, und um zu bestimmen, dass die Koordinatendaten außerhalb des Bereichs des Standzustands des Ventilators aufgrund von Schütteln des Ventilators liegen, wenn eine Änderung der vertikalen Koordinate einen ersten voreingestellten Bereich für eine bestimmte Zeitspanne überschreitet, wobei der erste voreingestellte Bereich -20°~20° ist und die bestimmte Zeitspanne 500ms ist, und
ein zweites Bestimmungsmodul, das konfiguriert ist, um gemäß der vertikalen Koordinate in den Koordinatendaten zu bestimmen, ob die Koordinatendaten außerhalb des Bereichs des Standzustands des Ventilators liegen, und um zu bestimmen, dass die Koordinatendaten außerhalb des Bereichs des Standzustands des Ventilators aufgrund von Bewegen des Ventilators liegen, wenn eine Änderung der vertikalen Koordinate einen zweiten voreingestellten Bereich überschreitet, wobei der zweite voreingestellte Bereich -255°~225° ist.

5. System nach Anspruch 4, wobei das Steuermodul (52) umfasst:
ein drittes Bestimmungsmodul, das so konfiguriert ist, dass es anhand einer horizontalen Koordinate in den Koordinatendaten bestimmt, ob die Koordinatendaten außerhalb des Bereichs des Standzustands des Ventilators liegen, und dass es bestimmt, dass die Koordinatendaten außerhalb des Bereichs des Standzustands des Ventilators liegen, wenn eine Änderung der horizontalen Koordinate einen dritten voreingestellten Bereich für eine bestimmte Zeitspanne überschreitet.

6. System nach einem der Ansprüche 4 bis 5, weiterhin aufweisend:
ein Alarmierungsmodul (53), das so konfiguriert ist, dass es einen Alarm auslöst, wenn die Koordinatendaten außerhalb des Bereichs des Standzustands liegen.

7. System nach Anspruch 6, weiterhin aufweisend:
ein Kommunikationsmodul (53), das so konfiguriert ist, dass es eine Alarmmeldung an ein voreingestelltes mobiles Endgerät sendet, wenn das Alarmierungsmodul den Alarm auslöst, so dass ein Benutzer den Zustand des Ventilators in Echtzeit überprüfen kann.

## Revendications

1. Procédé de protection d'un ventilateur, comprenant :
acquérir (S10) des données de coordonnées du ventilateur ; et
déterminer (S20) si les données de coordonnées sont au-delà de une portée d'un état de repos du ventilateur, et désactiver le ventilateur si les données de coordonnées sont au-delà de la portée de l'état de repos,
dans lequel les données de coordonnées du ventilateur sont acquises par un capteur de gravité (603) monté sur le ventilateur,
dans lequel les données de coordonnées comprennent une coordonnée verticale, le procédé étant **caractérisé en ce que** la détermination (S20) du fait que les données de coordonnées sont au-delà d'une portée de l'état de repos du ventilateur comprend :
déterminer que les données de coordonnées sont au-delà de la portée de l'état d'arrêt du ventilateur en raison de la secousse du ventilateur, si un changement de la coordonnée verticale dépasse une première plage prédéfinie pendant une certaine période de temps, dans laquelle la première plage prédéfinie est de -20 °~20°, et la certaine période de temps est de 500 ms , et
déterminer que les données de coordonnées sont au-delà de la portée de l'état d'arrêt du ventilateur en raison du déplacement du ventilateur, si un changement de la coordonnée verticale dépasse une seconde plage prédéfinie, dans laquelle la seconde plage prédéfinie est de -255°~225°.

2. Procédé selon la revendication 1, dans lequel les données de coordonnées comprennent une coordonnée horizontale, et déterminer (S20) si les données de coordonnées sont au-delà d'une portée d'un état de repos du ventilateur comprend :
déterminer que les données de coordonnées sont en dehors de la portée de l'état d'arrêt du ventilateur, si un changement de la coordonnée horizontale dépasse une troisième plage prédéfinie pendant une certaine période de temps.

3. Le procédé selon l'une quelconque des revendications précédentes, comprenant en outre :
déclencher (S30) une alarme si les données de coordonnées dépassent la portée de l'état de repos, et envoyer simultanément un message d'alarme à un terminal mobile prédéfini, de sorte qu'un utilisateur vérifie l'état du ventilateur en temps réel.

4. Système (500) pour protéger un ventilateur avec un capteur de gravité monté sur le ventilateur, le système comprenant :
un module d'acquisition (51), configuré pour acquérir des données de coordonnées du ventilateur ; et
un module de commande (52), configuré pour déterminer si les données de coordonnées sont au-delà d'une portée d'un état de repos du ventilateur, et pour désactiver le ventilateur si les données de coordonnées sont au-delà de la portée de l'état de repos,
dans lequel le module d'acquisition (51) est configuré pour acquérir les données de coordonnées du ventilateur par le capteur de gravité monté sur le ventilateur,
le système étant **caractérisé en ce que** le module de commande (52) comprend :
un premier module de détermination, configuré pour déterminer selon une coordonnée verticale dans les données de coordonnées si les données de coordonnées sont au-delà de la portée de l'état d'attente du ventilateur, et pour déterminer que les données de coordonnées sont au-delà de la portée de l'état d'attente du ventilateur en raison du tremblement du ventilateur si un changement de la coordonnée verticale dépasse une première plage prédéfinie pendant une certaine période de temps, dans lequel la première plage prédéfinie est -20°~20°, et la certaine période de temps est 500ms, et
un second module de détermination, configuré pour déterminer selon la coordonnée verticale dans les données de coordonnées si les données de coordonnées sont au-delà de la portée de l'état d'arrêt du ventilateur, et pour déterminer que les données de coordonnées sont au-delà de la portée de l'état d'arrêt du ventilateur en raison du déplacement du ventilateur si un changement de la coordonnée verticale dépasse une seconde plage prédéfinie, dans lequel la seconde plage prédéfinie est -255°~225°.

5. Système selon la revendication 4, dans lequel le module de commande (52) comprend :
un troisième module de détermination, configuré pour déterminer selon une coordonnée horizontale dans les données de coordonnées si les données de coordonnées sont au-delà de la portée de l'état d'arrêt du ventilateur, et pour déterminer que les données de coordonnées sont au-delà de la portée de l'état d'arrêt du ventilateur si un changement de la coordonnée horizontale dépasse une troisième plage prédéfinie pendant une certaine période de temps.

6. Le système selon l'une quelconque des revendications 4 à 5, comprenant en outre :
un module d'alarme (53), configuré pour déclencher une alarme si les données de coordonnées sont en dehors de la portée de l'état d'attente.

7. Système selon la revendication 6, comprenant en outre :
un module de communication (53), configuré pour envoyer un message d'alarme à un terminal mobile prédéfini en même temps que le module d'alarme déclenche l'alarme, de sorte qu'un utilisateur vérifie l'état du ventilateur en temps réel.
